# EUROPEAN PATENT SPECIFICATION

(11) **EP 2 760 166 B1**
(45) Date of publication and mention of the grant of the patent: **28.06.2017**
(21) Application number: 13152590.9
(22) Date of filing: 24.01.2013
(51) Int. Cl.: H04L 12/46, H04L 29/06, H04W 52/02

(54) **Method and system for managing a VPN connection**
Verfahren und System zur Verwaltung einer VPN-Verbindung
Procédé et système pour gérer une connexion VPN

(43) Date of publication of application: 30.07.2014
(73) Proprietor: BlackBerry Limited, Waterloo, ON N2K 0A7 (CA)
(72) Inventor: Tse, Chi Chiu, Mississauga, Ontario L4W 0B5 (CA); Halliop, Ania, Mississauga, Ontario L4W 0B5 (CA); Lai, Chun Hei Justin, Mississauga, Ontario L4W 0B5 (CA)
(74) Representative: Hanna Moore + Curley

(56) References cited:
- EP-A1- 2 403 212
- US-A1- 2012 078 998

## Description

### FIELD OF THE DISCLOSURE

The present disclosure relates to connectivity between a device and a network server and in particular relates to management of a virtual private network (VPN) connection between a device and a server.

### BACKGROUND

A virtual private network is a private communication network used to communicate confidentially over a publicly accessible network. VPN message traffic can be carried over a public network infrastructure, such as the Internet, on top of standard protocols. VPNs are used, for example, to enable employees to connect securely to a corporate network.

VPN connections are used to carry both data traffic and control traffic. The control traffic is used to maintain a VPN connection or to ensure that the connection is still active. For example, a VPN tunnel may proceed through a firewall/network address translation (NAT), which may close the tunnel if no traffic is detected for a certain time period. Thus, in many cases, a VPN client or server may send messages to the firewall/NAT to keep the tunnel open. In other cases, control messaging can be provided between a VPN client and a VPN server in order to ensure that the connection is still active.

However, if the VPN connection is not being used for data transfer, the control messaging between the VPN client and VPN server still utilize network resources and further, if the VPN client is on a device has an internal power source, then such traffic uses power source resources.

EP 2403212 discloses a VPN client on a mobile device to manage VPN connections. The VPN client may tear down a VPN connection if the mobile device goes to sleep or if the connection is idle for a predetermined period.

### SUMMARY

Accordingly, the present teaching provides a method at a computing device configured to send and receive traffic over a virtual private network (VPN) connection in accordance with claim 1. Advantageous features are provided in the dependent claims.

Accordingly, the present teaching provides a computing device configured to send and receive traffic over a virtual private network (VPN) connection in accordance with claim 9.

### BRIEF DESCRIPTION OF THE DRAWINGS

The present disclosure will be better understood with reference to the drawings, in which:
**Figure 1** is a block diagram showing an example architecture for a VPN connection between a device and server;
**Figure 2** is a flow diagram showing an example process at a computing device for tearing down a VPN connection;
**Figure 3** is flow diagram showing an example process at a computing device for tearing down a VPN connection, the process having a plurality of timeout values;
**Figure 4** is a flow diagram showing an example process at a computing device for re-establishing a VPN connection when transitioning the device to an active mode;
**Figure 5** is a flow diagram an example process at a computing device for re-establishing a VPN connection based on either transitioning the device to an active mode or periodically; and
**Figure 6** is a block diagram showing an example mobile device capable of being used with the present disclosure.

### DETAILED DESCRIPTION OF THE DRAWINGS

The present disclosure provides a method at a computing device configured to send and receive traffic over a virtual private network (VPN) connection, the method comprising: determining that a first trigger had been met; monitoring whether data traffic exists over the VPN connection for a first time period; and if no data traffic exists over the VPN connection for the first time period, disconnecting the VPN connection

The present disclosure further provides a computing device configured to send and receive traffic over a virtual private network (VPN) connection, the computing device comprising: a processor; and a communications subsystem,

wherein the computing device is configured to: determine that a first trigger had been met; monitor whether data traffic exists over the VPN connection for a first time period; and if no data traffic exists over the VPN connection for the first time period, disconnect the VPN connection.

Various embodiments of the present disclosure relate to virtual private networks. As indicated above, a VPN is a private communications network used to communicate confidentially over a publicly accessible network and message traffic can be carried over a public network infrastructure such as the Internet. Examples of VPN protocols, for example, may include the Internet Protocol Security (IPSec) standard, as defined by the Internet Engineering Task Force (IETF), Layer 2 Tunneling Protocol (L2TP), Secure Sockets Layer (SSL) VPN, Point to Point Tunneling Protocol (PPTP), among others.

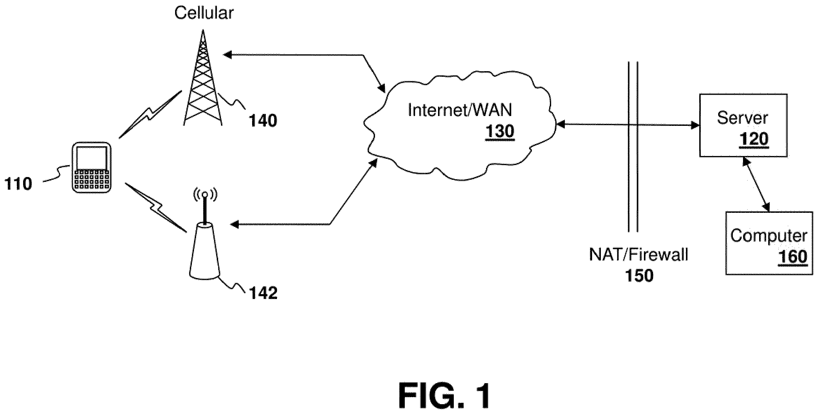

Reference is now made to **Figure 1**, which shows an example network architecture diagram for communication between a device and a VPN server. In particular, a device **110** includes a VPN client that wishes to establish a connection with a VPN server **120**. Device **110** could be any computing device and can include both wired and wireless devices. For example, device **110** may be a desktop computer, a laptop computer, smartphone, mobile device, tablet, among others.

In the example of **Figure 1**, device **110** is a mobile device which may communicate using a wide area network such as the Internet **130** utilizing various technologies. For example, device **110** may be a cellular device and may communicate through a cellular network **140**.

In addition, or alternatively, device **110** may also communicate through am access point **142**, which may include, for example, a WI-FI, WiLAN, other wired or wireless communication technology.

In the embodiment of **Figure 1**, server **120** is behind a firewall/NAT **150**. For example, server **120** may be part of an enterprise network that is protected through the firewall/NAT **150**. In this regard, communications between device **110** and server **120** will have to tunnel through the firewall/NAT **150**.

Further, other computing devices or servers, shown by reference **160**, can also be part of the enterprise network and communicate with server **120**.

In order to communicate between device **110** and server **120**, a VPN client on device **110** needs a VPN profile that is verified by server **120**. The VPN profile contains information that may be required to log into a VPN. The VPN profile may be related to the type of VPN and could include a variety of information, such as, for example, a user name, a password, address of the VPN server including an IP address, a subnet mask, a domain name server (DNS), domain name, cryptographic algorithms, configuration of NAT timeouts, among other information.

Utilizing the profile, a device **110** can then establish a secure connection with a server **120** over which communication is encrypted and is kept private.

The VPN connection may be established in a variety of ways. A first is a user established VPN in which a user of device **110** may initiate the VPN connection manually. A second is an automatic connection that may be established between device **110** and server **120**. The present disclosure focuses on the second.

An automatic VPN connection may be established if one or more parameters or rules are met. For example, a user of a mobile device, or an enterprise administrator controlling server **120**, may wish to have device **110** automatically connect to the server **120** using cellular in all cases. Thus, mobile device **110** may establish a VPN connection automatically whenever a cellular radio connection is available and active on device **110**.

In other cases a mobile device may be communicating over an access point **142**. One rule or criterion might be that an automatic VPN connection is established if the WiFi network has a particular identity. Thus, if the profile of a WiFi network, for example, matches predetermined criteria such as a home network or work network, then the device **110** may automatically establish a VPN connection with server **120**. In some embodiments such WiFi connection may preempt a connection over cellular. Other examples are possible.

The policies or rules for automatic VPN connection may be configured by a user in some cases, may be pushed to the device through an enterprise policy by an IT administrator, or may be preconfigured by a carrier or device manufacturer, for example.

If a VPN connection is automatically established but then subsequently goes down, policies may also exist on the device **110** to automatically reestablish the connection in order to maintain the connection between device **110** and server **120**.

In order to maintain the VPN connection, control traffic can be sent between device **110** and server **120**. Such control traffic, for example, may include messages to indicate to both the VPN client and VPN server that the connection is still active.

Further, the control traffic may also refresh the Internet Protocol (IP) tunnel. This may be done, for example, if the tunnel is travelling through a NAT **150**. Such control traffic may, for example, be sent periodically in order to maintain the connection when there is no data being sent over the tunnel.

However, the use of control traffic to keep the connection active when no data is sent for long periods of time may be costly in terms of network resource usage as well as the power supply life on the device. Specifically, in order to send such control traffic, the device will need to turn on its radio to periodically send or receive such control traffic, which leads to a drain in the power supply and further such control traffic utilizes network resources which may be a scarce commodity. Also, the sending of control traffic would count as data usage for a cellular data plan, and could cost a user money.

While the disclosure below discusses a device in terms of its battery, in some embodiments a power supply or power pack may be used. Such power supply may include a battery, but may also include other power sources such as a fuel cell system, a super capacitor, among others, acting either individually or in concert with each other. In other embodiments, a power supply may be a wall outlet, solar cell, among others.

In accordance with one embodiment of the present disclosure, a device may automatically establish a VPN connection, but if the VPN connection is not being used, the VPN connection may be shut down in order to provide for, for example, power savings and network resource savings. In particular, the maintaining of a VPN connection over a cellular connection requires periodic messages to be sent which wakes up the cellular radio. This may cause substantial drain to the power source.

Therefore, in accordance with one embodiment of the present disclosure, an automatic VPN connection may be taken down if there is no use of that connection. In particular, the amount of time the VPN connection is active is minimized by shutting down the VPN connection with some intelligence.

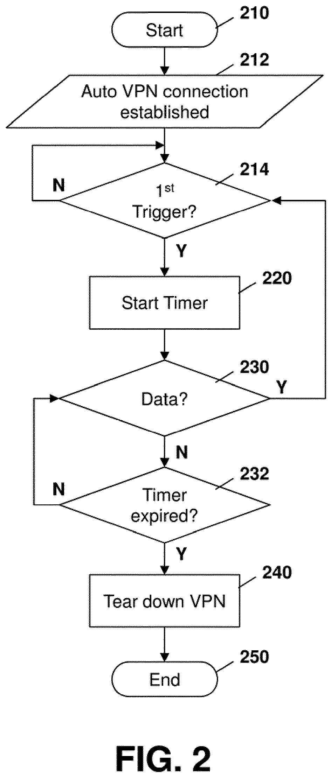

Reference is now made to **Figure 2**, which shows a process at a computing device. The process of **Figure 2** starts at block **210** and has a precondition that an automatic VPN connection is established, as shown by block **212**.

The process then proceeds to block **214**, in which a check is made to determine whether a first trigger has occurred. In one embodiment the trigger may be that the device goes into a "stand-by mode". As used herein, the term "stand-by mode" may also be referred to as a "sleep mode" or "idle operation".

In particular, an active operation or mode is the way the portable electronic device operates when it is in active use or actively being used by a user. Generally speaking, power demands of the device are typically higher during an active operation than during a stand-by mode. A device may have one or more active modes, with different levels of power demand.

A stand-by mode is the way the device operates when it is not in an active mode, and the power demands are generally low or lower than in an active mode. A device may have one or more stand-by modes and the stand-by mode may include, for example, de-activating some device functionality, powering down the device, turning or dimming a display, slowing down processing speed, turning off the device or otherwise operating the device in ways to conserve power.

A portable electronic device may enter a stand-by mode automatically. Some portable electronic devices enter a stand-by mode after a time interval, during which, if there is an absence of user input via any input device, the device enters the standby mode. When a portable electronic device enters stand-by mode, the display of the portable electronic device may, for example, turn off completely, or turn off in part, or become static or dim or inactive or unresponsive to touch.

Thus, in one embodiment, the trigger at block **214** may be that the device enters into a stand-by mode.

In another embodiment, the trigger at block **214** may comprise a combination of factors. For example, a combined trigger may be that the device enters into a stand-by mode, and also that the device has no external power source. In this case, if the device is plugged in, or drawing power from an external source, the trigger at block **214** may not be met.

In some embodiments, rather than the trigger at block **214** being the entering of the stand-by mode, an inactivity timer could be used instead. When the timer reaches a predetermined threshold then the first trigger could be met. Such timer may be used, for example, if a user has set the stand-by time to be extremely long on the device, and an inactivity timer may provide for a shorter time period than the time the device enters into a stand-by mode.

Other examples are possible.

Once the criteria for the first trigger are met, the process proceeds from block **214** to block **220**, in which a timer is started.

The value of the timer started at block **220** may be preconfigured on the device, set by an IT policy or set by a user, for example. The value of the timer may be selected to tradeoff between ensuring that any data transfer is identified and taking down the VPN connection as soon as possible. Specifically, data across the VPN connection may be bursty and the timer should be long enough to capture such sporadic data without waiting too long before tearing down the connection.

In some embodiments, the value of the timer set at block **220** can be static. In other embodiments the value of the timer set at block **220** may be dynamic. For example, a dynamic setting may use a power supply (e.g. battery) level to determine the time length. Thus, if the power supply or battery level of the device is below a threshold, the timer may be set to more aggressively tear down the VPN connection. Thus, a fully charged battery may lead to a longer timer value than a partially drained battery in some embodiments.

The process proceeds from block **220** to block **230** in which a check is made to determine whether or not data is passed across the VPN connection. The data may either originate at the device or may originate from a VPN server and be passed to the device. Further, as used in block **230**, data is application data, and does not include control traffic.

The check at block **230** determines whether or not data is transferred. If no data is transferred, the process proceeds to block **232** and checks whether or not the timer started at block **220** has expired. If not, the process proceeds back to block **230** to check for data.

Thus, the combination of blocks **230** and **232** wait for either data to arrive or the timer to expire.

If data arrives, the process proceeds from block **230** back to block **214** to check for the first trigger again.

In other embodiments, rather than proceeding back to block **214**, the process may proceed to block **220** to restart the timer. In this case, the changing of the trigger at block **214** (e.g. use of the device or the connection to an external power source) may cause an interrupt which would clear the timers. Other examples are possible.

If, at block **232**, the timer has expired, the process proceeds to block **240** and the VPN connection is disconnected. The tearing down of the VPN connection may involve signaling between a VPN client and server, or may simply involve the VPN client on the device to stop.

From block **240** the process proceeds to block **250** and ends.

The dual checks at block **214** and block **230** ensure that the device is inactive but also that the device has no data being sent across the VPN connection. In some cases a user may not be interacting with a device but may be still using the VPN connection. For example, if the user is listening to music being streamed over the VPN connection, then the user may not be physically interacting with the device and the device may enter into a stand-by mode, and this may be detected in block **214**. However, the check at block **230** would determine that there is still data being passed across the VPN connection and thus the process would proceed back to block **214**.

In other cases, the user may not be using the device and may not be using the VPN connection. Thus, after a certain period of inactivity the device enters stand-by mode and, for example, the screen or display may be powered down. Subsequently, the timer started at block **220** expires and the VPN connection is torn down since there is no data passing across the VPN connection.

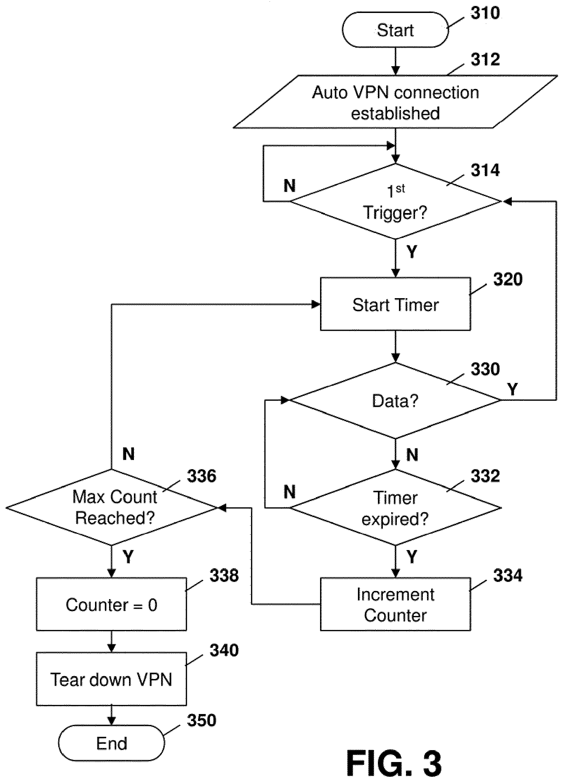

In a further embodiment, rather than having a single timer for the entire check at block **232**, the timer may be set for various increments. Reference is now made to **Figure 3**. The process of **Figure 3** starts at block **310** and has a pre-condition, shown by block **312**, that an automatic VPN connection has been established.

The process proceeds to block **314** to determine whether or not a first trigger has been met. The check at block **314** is similar to that at block **214** described above.

From block **314**, the process proceeds to block **320** in which a timer is started. The process then proceeds to block **330** in which a check is made to determine whether data has been transferred.

If no, the process proceeds to block **332** to determine whether a timer has expired. If no data has arrived and the timer has not expired, the process continues to loop between blocks **330** and **332**.

If data arrives, the process proceeds back to block **314** in which a check again is made to determine whether the first trigger has been met.

From block **332**, if the timer has expired the process then proceeds to block **334** in which a counter is incremented. The counter may count the number of timer expiries and from block **334** the process may proceed to block **336** in which a check is made to determine whether the count has reached a predetermined value. If not, the process may proceed back to block **320** to restart the timer and continue.

Conversely, if the count has reached a pre-determined value then the process proceeds to block **338** in which the count is reset to zero and the process then proceeds to block **340** in which the VPN connection is torn down.

The process then proceeds to block **360** and ends.

Thus, in accordance with **Figure 3**, the timer could be broken down into a plurality of thresholds which have to be reached a certain number of times. For example, if the timer at block **220** of **Figure 2** was set to 30 seconds, in the embodiment of **Figure 3** the timer could be set to 10 seconds and the check at block **336** could determine whether or not the count has reached 3 prior to proceeding to block **338**.

In the embodiments of **Figures 2** and **3** above, a check could also be introduced, either between blocks **230** and **232** in **Figure 2**, between block **330** and **332** in **Figure 3**, or prior to the tearing down of the VPN connection at blocks **240** or **340**, to determine whether or not the first trigger has still expired. Thus, for example, if the device enters a stand-by mode and the user immediately starts to use the device afterwards, it may be beneficial to avoid tearing the VPN connection and the additional check would prevent this from happening.

In one embodiment, since the VPN connection is automatic, it may be beneficial to restore the connection. In some embodiments, the connection may be restored once user interaction with the device occurs. In addition, or alternatively, it may be beneficial to restore the connection after a certain time period to check for any data that may be pending between the device and the server.

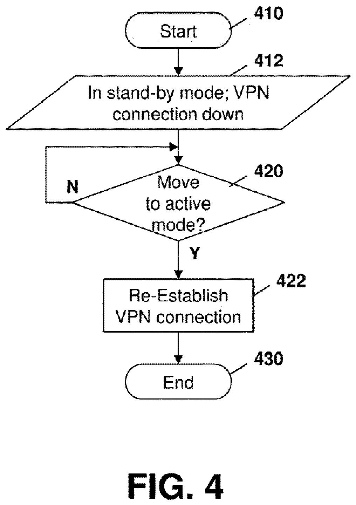

Reference is now made to **Figure 4**. The process of **Figure 4** starts at block **410** and has a pre-condition that the device is in a stand-by mode, as shown by block **412**.

The process proceeds to block **420** in which a check is made to determine whether the device has transitioned to an active mode. For example, this may occur with user interaction with the device.

If the device has not transitioned to active mode, the process proceeds to loop back to block **420**.

Once the device transitions to an active mode, the process proceeds to block **422** in which the VPN connection is restored and the process then proceeds to block **430** and ends.

In a further embodiment, the device may establish a connection periodically to check whether any data is pending for the device.

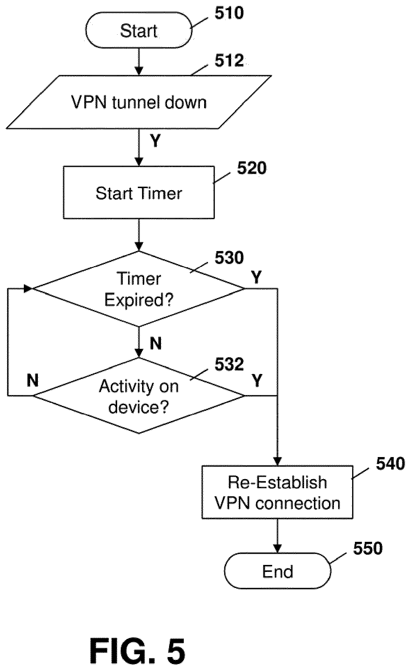

Reference is now made to **Figure 5**. The process of **Figure 5** starts at block **510** and has a pre-condition that the device is in a stand-by mode and that the VPN connection is down.

The process proceeds to block **520** in which a timer is started. The value of the timer at block **520** may be set by a network IT administrator, a user, a device manufacturer, or a carrier, among others. The timer value may be sufficiently long to reduce power supply drain. For example, in one embodiment the timer may be 15 minutes.

As with the timer of **Figures 2** and **3**, the timer duration for the timer of block **520** can be static or dynamic. For example, a dynamic setting of the timer duration may be linked to the power source level of the device. The level of the power source may cause the timer duration to be extended or shorted in one embodiment. Thus, when the power source is more charged, the duration of the timer may be shorter to ensure data is not missed for too long, whereas if the power source is less charged, the duration of the timer may be longer to enhance power source savings.

Once the timer is started at block **520** the process proceeds to block **530** in which a check is made to determine whether or not the timer has expired.

If not, the process proceeds to block **532** in which a check is made to determine whether any activity has occurred on the device. Such activity could be user interaction with the device or the connection of the device to an external power source, for example.

If the timer has not expired and there is no activity on the device, the process continues to loop between blocks **530** and **532**.

If the timer has expired at block **530**, or there is device activity detected at block **532**, the process proceeds to block **540** in which the VPN connection is re-established. Such re-establishing may use the automatic VPN connection profile as described above.

The process then proceeds to block **550** and ends.

Once the connection is re-established at block **540**, the device may start the process of **Figure 2** or **Figure 3** again. In this case, if the connection is re-established based on the timer expiring, the trigger at blocks **214** or **314** may still be met, since the device may already be in the stand-by mode and not plugged in to an external power source, for example. Thus, in the processes of **Figures 2** or **3**, the timer to check for data at blocks **220** and **320** could be started and if there is no data during the timer period then the connection could be torn down at blocks **240** or **340**.

Thus, a combination of the embodiments of **Figures 2** or **3** with the embodiment of **Figure 5** could intelligently take down a VPN connection that is not being used but periodical check to determine whether the VPN connection is needed, thereby saving power resources on the device, network resources for signaling between the device and the server, potential reduce data charges for the device, among other factors.

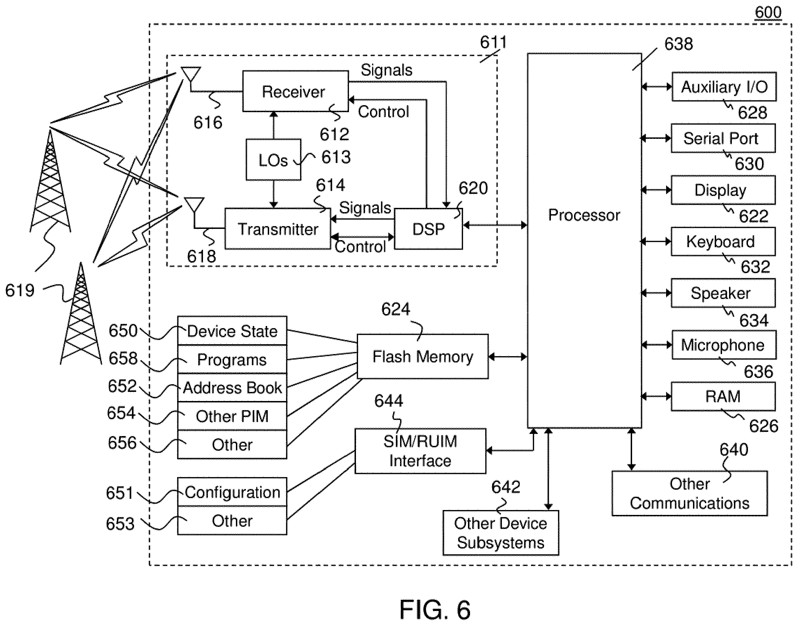

The above embodiments may be implemented on any device. If the above is implemented on a mobile device, one example mobile device is shown below with regard to **Figure 6**. The mobile device of **Figure 6** is however not meant to be limiting and other mobile devices could also be used.

Mobile device **600** may comprise a two-way wireless communication device having any of voice capabilities, data communication capabilities, or both. Mobile device **600** generally has the capability to communicate with other devices or computer systems. Depending on the exact functionality provided, the mobile device may be referred to as a data messaging device, a two-way pager, a wireless e-mail device, a cellular telephone with data messaging capabilities, a wireless Internet appliance, a wireless device, a user equipment, a tablet, or a data communication device, as examples.

Where mobile device **600** is enabled for two-way communication, it may incorporate a communication subsystem **611**, including both a receiver **612** and a transmitter **614**, as well as associated components such as one or more antenna elements **616** and **618**, local oscillators (LOs) **613**, and a processing module such as a digital signal processor (DSP) **620**. As will be apparent to those skilled in the field of communications, the particular design of the communication subsystem **611** will be dependent upon the communication network in which the device is intended to operate.

Network access requirements will also vary depending upon the type of network **619**. In some networks, network access is associated with a subscriber or user of mobile device **600**. A mobile device may require a removable user identity module (RUIM) or a subscriber identity module (SIM) card in order to operate on the network. The SIM/RUIM interface **644** may be similar to a card-slot into which a SIM/RUIM card can be inserted and ejected like a diskette or PCMCIA card. The SIM/RUIM card can have memory and hold many key configuration **651**, and other information **653** such as identification, and subscriber related information.

When required network registration or activation procedures have been completed, mobile device **600** may send and receive communication signals over the network **619**. As illustrated in **Figure 6**, network **619** can consist of multiple base stations communicating with the mobile device. For example, in a hybrid CDMA 1x EVDO system, a CDMA base station and an EVDO base station communicate with the mobile station and the mobile device is connected to both simultaneously. In other systems such as Long Term Evolution (LTE) or Long Term Evolution Advanced (LTE-A), multiple base stations may be connected to for increased data throughput. Other systems such as GSM, GPRS, UMTS, HSDPA, among others are possible and the present disclosure is not limited to any particular cellular technology.

Signals received by antenna **616** through communication network **619** are input to receiver **612**, which may perform such common receiver functions as signal amplification, frequency down conversion, filtering, channel selection and the like, and in the example system shown in **Figure 6**, analog to digital (A/D) conversion. A/D conversion of a received signal allows more complex communication functions such as demodulation and decoding to be performed in the DSP **620**. In a similar manner, signals to be transmitted are processed, including modulation and encoding for example, by DSP **620** and input to transmitter **614** for digital to analog conversion, frequency up conversion, filtering, amplification and transmission over the communication network **619** via antenna **618**. DSP **620** not only processes communication signals, but also provides for receiver and transmitter control. For example, the gains applied to communication signals in receiver **612** and transmitter **614** may be adaptively controlled through automatic gain control algorithms implemented in DSP **620**.

Mobile device **600** generally includes a processor **638** which controls the overall operation of the device. Communication functions, including data and voice communications, are performed through communication subsystem **611**. Processor **638** also interacts with further device subsystems such as the display **622**, flash memory **624**, random access memory (RAM) **626**, auxiliary input/output (I/O) subsystems **628**, serial port **630**, one or more keyboards or keypads **632**, speaker **634**, microphone **636**, other communication subsystem **640** such as a short-range communications subsystem and any other device subsystems generally designated as **642**. Serial port **630** could include a USB port or other port known to those in the art having the benefit of the present disclosure.

Some of the subsystems shown in **Figure 6** perform communication-related functions, whereas other subsystems may provide "resident" or on-device functions. Notably, some subsystems, such as keyboard **632** and display **622**, for example, may be used for both communication-related functions, such as entering a text message for transmission over a communication network, and device-resident functions such as a calculator or task list, among other applications.

Operating system software used by the processor **638** may be stored in a persistent store such as flash memory **624**, which may instead be a read-only memory (ROM) or similar storage element (not shown). Those skilled in the art will appreciate that the operating system, specific device applications, or parts thereof, may be temporarily loaded into a volatile memory such as RAM **626**. Received communication signals may also be stored in RAM **626**.

As shown, flash memory **624** can be segregated into different areas for both computer programs **658** and program data storage **650**, **652**, **654** and **656**. These different storage types indicate that each program can allocate a portion of flash memory **624** for their own data storage requirements.

Processor **638**, in addition to its operating system functions, may enable execution of software applications on the mobile device. A predetermined set of applications that control basic operations, including data or voice communication applications for example, as well as a predetermined set of certificates, will normally be installed on mobile device **600** during manufacturing. Other applications could be installed subsequently or dynamically.

Applications and software, such as those described above may be stored on any computer readable storage medium. The computer readable storage medium may be a tangible or intransitory/non-transitory medium such as optical (e.g., CD, DVD, etc.), magnetic (e.g., tape) or other memory known in the art.

One example software application may be a personal information manager (PIM) application having the ability to organize and manage data items relating to the user of the mobile device such as, but not limited to, e-mail, calendar events, voice mails, appointments, and task items. Further applications, include, but are not limited to, a VPN client, media player, camera, messenger, mail, calendar, address book, web browser, social networking, game, electronic book reader, map, or other application may also be loaded onto the mobile device **600** through the network **619**, an auxiliary I/O subsystem **628**, serial port **630**, short-range communications subsystem **640** or any other suitable subsystem **642**, and installed by a user in the RAM **626** or a non-volatile store (not shown) for execution by the processor **638**. Such flexibility in application installation increases the functionality of the device and may provide enhanced on-device functions, communication-related functions, or both. For example, secure communication applications may enable electronic commerce functions and other such financial transactions to be performed using the mobile device **600**.

In a data communication mode, a received signal such as a text message or web page download will be processed by the communication subsystem **611** and input to the processor **638**, which may further process the received signal for output to the display **622**, or alternatively to an auxiliary I/O device **628**.

A user of mobile device **600** may also compose data items such as email messages for example, using a keyboard **632**, which may comprise a virtual or physical keyboard or both, and may include a complete alphanumeric keyboard or telephone-type keypad, among others, in conjunction with the display **622** and possibly an auxiliary I/O device **628**. Such composed items may then be transmitted over a communication network through the communication subsystem **611**.

For voice communications, overall operation of mobile device **600** is similar, except that received signals would typically be output to one or more speakers **634** and signals for transmission would be generated by a microphone **636**. Alternative voice or audio I/O subsystems, such as a voice message recording subsystem, may also be implemented on mobile device **600**. Although voice or audio signal output may be accomplished primarily through the one or more speakers **634**, display **622** may also be used to provide an indication of the identity of a calling party, the duration of a voice call, or other voice call related information for example.

Serial port **630** in **Figure 6** would normally be implemented in a personal digital assistant (PDA)-type mobile device for which synchronization with a user's desktop computer (not shown) may be desirable, but is an optional device component. Such a port **630** would enable a user to set preferences through an external device or software application and would extend the capabilities of mobile device **600** by providing for information or software downloads to mobile device **600** other than through a wireless communication network. The alternate download path may for example be used to load an encryption key onto the device through a direct and thus reliable and trusted connection to thereby enable secure device communication. As will be appreciated by those skilled in the art, serial port **630** can further be used to connect the mobile device to a computer to act as a modem.

Other communications subsystems **640**, such as a short-range communications subsystem, are further optional components which may provide for communication between mobile device **600** and different systems or devices, which need not necessarily be similar devices. For example, the subsystem **640** may include WiFi or WiMAX circuits, an infrared device and associated circuits and components, near field communications (NFC) or a Bluetooth™ communication module to provide for communication with similarly enabled systems and devices.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method at a computing device (110) configured to send and receive traffic over a virtual private network "VPN" connection, the method comprising:
determining (214, 314) that a first trigger had been met;
upon the first trigger being met, monitoring (230, 330) whether data traffic exists over the VPN connection for a first time period; and
if no data traffic exists over the VPN connection for the first time period (232, 332), disconnecting the VPN connection (240, 340);
wherein the first time period is dynamic and dependent on a power source level of the computing device.

2. The method of claim 1, wherein the first trigger is a transition of the computing device into a stand-by mode.

3. The method of claim 2, wherein the first trigger comprises the computing device having only an internal power source.

4. The method of claim 1, wherein the first time period is static and set by one of a user, an information technology policy, a device manufacturer or a carrier.

5. The method of claim 1, wherein the first time period is broken into a plurality of sub-periods, wherein:
a timer is reset at the beginning of each sub-period if no data arrives during the sub-period;
a counter is incremented (334) at the end the first time period; and
the VPN connection is disconnected (340) when the counter reaches a pre-determined value (336).

6. The method of claim 1, further comprising re-establishing (422) the VPN connection upon the computing device transitioning into an active mode (420).

7. The method of claim 1, further comprising re-establishing (422) the VPN connection upon expiry of a second time period.

8. The method of claim 7, wherein the second time period is dynamic and dependent on a condition of the computing device.

9. A computing device (110, 600) configured to send and receive traffic over a virtual private network "VPN" connection, the computing device comprising:
a processor (638); and
a communications subsystem,
wherein the computing device (110) is configured to perform the method of any one of claims 1 to 8.

10. A computer program which when executed on a processor of a computing device is configured to carry out the method of any one of claims 1 to 8.

## Patentansprüche

1. Verfahren an einer Computervorrichtung (110), die konfiguriert ist zum Senden und Empfangen von Verkehr über eine VPN(virtual private network)-Verbindung, wobei das Verfahren aufweist:
Bestimmen (214, 314), dass ein erster Auslöser erreicht wurde;
wenn der erste Auslöser erreicht ist, Überwachen (230, 330), ob ein Datenverkehr über die VPN-Verbindung für eine erste Zeitperiode besteht; und
wenn kein Datenverkehr über die VPN-Verbindung für die erste Zeitperiode (232, 332) besteht, trennen der VPN-Verbindung (240, 340);
wobei die erste Zeitperiode dynamisch und abhängig von einem Energiequellenpegel der Computervorrichtung ist.

2. Das Verfahren gemäß Anspruch 1, wobei der erste Auslöser ein Übergang der Computervorrichtung in einen Stand-by-Modus ist.

3. Das Verfahren gemäß Anspruch 2, wobei der erste Auslöser aufweist, dass die Computervorrichtung nur eine interne Energiequelle hat.

4. Das Verfahren gemäß Anspruch 1, wobei die erste Zeitperiode statisch ist und durch eines aus einem Benutzer, einer Informationstechnologierichtlinie, einem Gerätehersteller oder einem Carrier festgelegt wird.

5. Das Verfahren gemäß Anspruch 1, wobei die erste Zeitperiode in eine Vielzahl von Teilperioden unterteilt wird, wobei:
ein Timer zu Beginn jeder Teilperiode zurückgesetzt wird, wenn keine Daten während der Teilperiode ankommen;
ein Zähler an dem Ende der ersten Zeitperiode inkrementiert wird (334); und
die VPN-Verbindung getrennt wird (340), wenn der Zähler einen vorgegebenen Wert (336) erreicht.

6. Das Verfahren gemäß Anspruch 1, das weiter ein Wiederherstellen (422) der VPN-Verbindung aufweist, wenn die Computervorrichtung in einen aktiven Modus (420) übergeht.

7. Das Verfahren gemäß Anspruch 1, das weiter ein Wiederherstellen (422) der VPN-Verbindung bei Ablauf einer zweiten Zeitperiode aufweist.

8. Das Verfahren gemäß Anspruch 7, wobei die zweite Zeitperiode dynamisch ist und von einem Zustand der Computervorrichtung abhängig ist.

9. Eine Computervorrichtung (110, 600), die konfiguriert ist zum Senden und Empfangen von Verkehr über eine VPN(virtual private network)-Verbindung, wobei die Computervorrichtung aufweist:
einen Prozessor (638); und
ein Kommunikationsteilsystem,
wobei die Computervorrichtung (110) konfiguriert ist zum Durchführen des Verfahrens gemäß einem der Ansprüche 1 bis 8.

10. Ein Computerprogramm, das bei Ausführung auf einem Prozessor einer Computervorrichtung konfiguriert ist zum Ausführen des Verfahrens gemäß einem der Ansprüche 1 bis 8.

## Revendications

1. Procédé exécuté sur un dispositif informatique (110) configuré pour envoyer et recevoir du trafic sur une connexion par réseau privé virtuel, VPN pour « *Virtual Private Network* », le procédé comprenant les étapes consistant à :
déterminer (214, 314) qu'un premier événement déclencheur a été rencontré ;
après occurrence du premier événement déclencheur, rechercher (230, 330) s'il existe du trafic de données sur la connexion VPN pendant une première période de temps ; et
s'il n'existe pas de trafic de données sur la connexion VPN pendant la première période de temps (232, 332), déconnecter la connexion VPN (240, 340) ;
dans lequel la première période de temps est dynamique et dépend d'un niveau de source d'alimentation du dispositif informatique.

2. Procédé selon la revendication 1, dans lequel le premier événement déclencheur est une transition du dispositif informatique vers un mode de veille.

3. Procédé selon la revendication 2, dans lequel le premier événement déclencheur consiste dans le fait que le dispositif informatique ne possède qu'une source d'alimentation interne.

4. Procédé selon la revendication 1, dans lequel la première période de temps est statique et est définie par un utilisateur, une politique de technologies de l'information, un constructeur du dispositif ou un opérateur.

5. Procédé selon la revendication 1, dans lequel la première période de temps est divisée en une pluralité de sous-périodes, dans lequel :
un compteur est incrémenté (334) à la fin de la première période de temps ; et
la connexion VPN est déconnectée (340) lorsque le compteur atteint une valeur prédéterminée (336).

6. Procédé selon la revendication 1, comprenant en outre l'étape consistant à rétablir la connexion VPN lorsque le dispositif informatique passe dans un mode actif (420).

7. Procédé selon la revendication 1, comprenant en outre l'étape consistant à rétablir la connexion VPN après expiration d'une seconde période de temps.

8. Procédé selon la revendication 7, dans lequel la seconde période de temps est dynamique et dépend d'une situation du dispositif informatique.

9. Dispositif informatique (110, 600) configuré pour envoyer et recevoir du trafic sur une connexion par réseau privé virtuel, VPN pour « *Virtual Private Network* », le dispositif informatique comprenant :
un processeur (638) ; et
un sous-système de communication ;
dans lequel le dispositif informatique (110) est configuré pour exécuter le procédé selon l'une quelconque des revendications 1 à 8.

10. Programme d'ordinateur qui, lorsqu'il est exécuté sur un processeur d'un dispositif informatique, est configuré pour exécuter le procédé selon l'une quelconque des revendications 1 à 8.
